# EUROPÄISCHE PATENTSCHRIFT

(11) **EP 3 606 693 B1**
(45) Veröffentlichungstag und Bekanntmachung des Hinweises auf die Patenterteilung: **14.08.2024**
(21) Anmeldenummer: 18713899.5
(22) Anmeldetag: 27.03.2018
(51) Int. Cl.: B23B 51/00

(54) **BOHRWERKZEUG MIT WECHSELSCHNEIDPLATTE**
DRILLING TOOL WITH REPLACEABLE CUTTING PLATE
OUTIL DE PERÇAGE AVEC PLAQUETTE DE COUPE INTERCHANGEABLE

(30) Priorität: 04.04.2017 DE 102017107249
(43) Veröffentlichungstag der Anmeldung: 12.02.2020
(73) Patentinhaber: Botek Präzisionsbohrtechnik GmbH, 72585 Riederich (DE)
(72) Erfinder: DEEG, Juergen, 72555 Metzingen (DE)
(74) Vertreter: DREISS Patentanwälte PartG mbB
(86) Internationale Anmeldenummer: PCT/EP2018/057704
(87) Internationale Veröffentlichungsnummer: WO 2018/184901

(56) Entgegenhaltungen:
- EP-A1- 1 864 733
- EP-A2- 1 531 023
- WO-A1-2005/065872
- CN-A- 104 185 526
- US-A1- 2004 175 245

## Beschreibung

Die Erfindung betrifft ein Bohrwerkzeug mit einer auswechselbaren Schneidplatte zur spanabhebenden Bearbeitung auf Bohrmaschinen, Drehmaschinen, Bearbeitungszentren und anderen Werkzeugmaschinen, sowie eine Wechselschneidplatte dafür.

Bohrwerkzeuge mit Wechselschneidplatte gibt es in den unterschiedlichsten Ausführungen; sie sind auch als Wechselplattenbohrer bekannt.

Wechselplattenbohrer umfassen ein Einspannende, einen im Wesentlichen zylindrischen Schaft und einen Bohrkopf. Das Einspannende befindet sich am hinteren Ende, der Bohrkopf befindet sich am vorderen Ende. Dazwischen ist der Schaft angeordnet. Eine Längsachse, die der Drehachse beim Bohren entspricht, erstreckt sich vom Einspannende bis zum Bohrkopf. Am vorderen Ende (Bohrkopf) ist eine Aufnahme für die Wechselschneidplatte ausgebildet. Das Einspannende ist ein meist zylindrischer Aufnahmeschaft zur Befestigung des Bohrwerkzeugs an der Maschinenspindel.

Schließlich ist am Bohrkopf ein Schneideinsatz (Wechselschneidplatte) lösbar befestigt, so dass die bei der spanabhebenden Bearbeitung entstehenden Drehmomente vom Schneideinsatz auf den Grundkörper übertragen werden.

Einspannende, Schaft und Bohrkopf können aus einem Stück hergestellt werden. Es ist ebenso möglich, das Einspannende und/oder den Bohrkopf an dem Schaft anzulöten oder anderweitig zu befestigen. Dann besteht das Bohrwerkzeug aus zwei oder drei miteinander verbundenen Bauteilen. In dem Bohrkopf ist eine Aufnahme für die Wechselschneidplatte ausgebildet.

Die Wechselschneidplatte besteht aus einem harten Material, das sich als Schneidstoff für die spanende Bearbeitung eignet, z.B. Schnellarbeitsstahl, Sinter-Hartmetall, Cermet oder Keramik, welches noch mit einer zusätzlichen Hartstoffschicht zur Verlängerung der Lebensdauer versehen sein kann, und weist Schneidkanten zur spanenden Bearbeitung auf. Ein verschlissener Schneideinsatz kann bei Erreichen der Verschleißgrenze gegen einen neuen Schneideinsatz ausgetauscht werden, so dass der Wechselplattenbohrer wieder für weitere Bearbeitungen eingesetzt werden kann.

Der Grundkörper hingegen ist für eine längere Lebensdauer ausgelegt und für die Verwendung einiger Schneideinsätze nacheinander vorgesehen. Dadurch ergibt sich eine gute Wirtschaftlichkeit dieser Bohrwerkzeuge.

Die an der Spitze des Bohrwerkzeugs bzw. der Wechselschneidplatte entstehenden Späne werden durch wenigstens zwei Spanabfuhrnuten abgeführt, die sich vom vorderen Ende in Richtung hinteres Ende erstrecken und üblicherweise vor dem Einspannschaft enden. Bei größeren Bohrtiefen ab ca. L/D = 3 wird vorzugsweise Kühlmittel zum Ausspülen der Späne verwendet, das vom hinteren Ende des Grundkörpers durch Kühlkanäle zugeführt wird, die sich im Grundkörper vom hinteren zum vorderen Ende erstrecken und die über wenigstens eine Öffnung am hinteren und wenigstens zwei Öffnungen am vorderen Ende verfügen.

Dies ist dem Fachmann hinlänglich bekannt, so dass auf eine detaillierte Erläuterung verzichtet werden kann.

Die Verbindung zwischen einer Wechselschneidplatte und dem Bohrkopf ist sehr anspruchsvoll, weil der verfügbare Bauraum vom Bohrdurchmesser vorgegeben ist und bei Hochleistungswerkzeugen erhebliche Drehmomente und Vorschubkräfte von dem Bohrwerkzeug auf die Schneidplatte übertragen werden müssen. Außerdem sind die Anforderungen an die Qualität der Bohrung (Oberfläche, Maßhaltigkeit und Geradheit) sehr hoch, so dass eine exakte Positionierung der Schneidplatte in dem Bohrkopf von immer größerer Bedeutung wird.

Die Erfindung betrifft die formschlüssige und einfach lösbare Verbindung zwischen einer Wechselschneidplatte und dem Bohrkopf. Diese Verbindung kann bei Wechselschneidplatten mit verschiedensten Schneidengeometrie eingesetzt werden.

Zur Beschreibung der erfindungsgemäßen formschlüssigen Verbindung zwischen Wechselschneidplatte und Bohrkopf werden verschiedene Begriffe aus der Geometrie verwandt, die nachfolgend kurz definiert werden sollen. Diese Definitionen entsprechen den üblichen mathematischen Definitionen, wie sie beispielsweise im "Großen Handbuch der Mathematik", Herausgeber W. Gellert, Dr. H. Küstner, Dr. M. Hellwich und H. Kästner zu finden sind.

**Parallele Ebenen:** Zwei Ebenen sind parallel, wenn sie an jeder Stelle den gleichen Abstand zueinander haben. Ebenen, die keinen Abstand zueinander haben, sind daher keinen parallelen Ebenen. Das Adjektiv "parallel" impliziert somit einen Abstand der Ebenen voneinander.

**Normalenvektor:** Er steht orthogonal auf der Ebene und wird im Zusammenhang mit der Erfindung benutzt, um die Ausrichtung einer Ebene anzugeben. Beispiel: Eine Ebene, die sich in einem kartesischen Koordinatensystem parallel zur X-Achse und zur Y-Achse erstreckt, hat einen Normalenvektor, der sich in Richtung der Z-Achse erstreckt.

**Prisma:** Gleitet eine Gerade, ohne ihre Richtung zu verändern, im Raum an den Begrenzungslinien eines ebenen n-Ecks entlang, so beschreibt sie eine prismatische Fläche. Wenn zwei parallele Ebenen durch diese prismatische Fläche gelegt werden, dann wird der zwischen ihnen liegende Abschnitt der prismatischen Fläche als "Prisma" bezeichnet.

**Zentrale Symmetrie:** Als zentralsymmetrisch werden solche Figuren bezeichnet, deren Punkte durch eine ebene Drehung von 180° um einen Punkt S zur Deckung gebracht werden können. Den Punkt S nennt man Symmetriezentrum oder Zentralpunkt. Bei dem erfindungsgemäßen Bohrwerkzeug liegt der Symmetriepunkt in der Längsachse des Bohrwerkzeugs.

Aus der WO2005065872A1 ist ein Wechselplattenbohrer mit einem lösbar befestigten Schneideinsatz bekannt.

Der Schneideinsatz weist ein erstes und ein gegenüberliegendes zweites Ende und wenigstens zwei Öffnungen im Schneideinsatz-Körper auf, die sich jeweils von der helixförmigen Spannut durch den Schneideinsatz-Körper hindurch auf eine gegenüberliegende, ebene Kontaktfläche erstrecken.

Die Befestigung des Schneideinsatzes am Grundkörper erfolgt dabei durch Schrauben, die durch die Öffnungen geführt werden und die tangentialen Kontaktflächen des Schneideinsatzes an den tangentialen Stützflächen des Grundkörpers anliegen.

Diese Art der Befestigung macht es notwendig, dass bei jedem Wechsel der Schneidplatte mindestens zwei Schrauben komplett entfernt werden müssen, was einen hohen Zeitaufwand darstellt.

Aus der EP 1 986 73 A1 ist ein Bohrwerkzeug mit einem geschlitzten Ende bekannt. Im Bereich des geschlitzten Endes ist eine zentrale Ausnehmung mit drehmomentübertragenden Flächen ausgebildet. In axialer Richtung daran asnchließend ist eine zylindrische Ausnehmung zum Zentrieren einer Schneidplatte vorgesehen. Dahinter ist eine Querbohrung vorhanden in die eine Klemmschraube eingedreht wird.

Aus der DE 19980707 B4 sind ein zusammengesetztes Schneidwerkzeug und ein lösbar daran befestigter Schneideinsatz bekannt. Zur Befestigung des Schneideinsatzes an dem Schneidwerkzeug wird der Schneideinsatz zwischen zwei Klemmbacken des Grundkörpers eingeführt. In dem aus Hartstoff gefertigten Schneideinsatz ist wenigstens eine Bohrung vorhanden, was hohe Herstellungskosten zur Folge hat. Anschließend+ wird eine Spannschraube durch die Klemmbacken und den Schneideinsatz gesteckt. Durch Anziehen der Spannschraube wird der Schneideinsatz zwischen den Klemmbacken festgeklemmt.

Dies erfordert ein vollständiges Entfernen der Schraube(n) bei jedem Wechsel des Schneideinsatzes, was einen hohen zeitlichen Aufwand bedeutet. Außerdem ist die Handhabung relativ aufwendig.

Aus der JP 2014205216 A sind ein zusammengesetztes Schneidwerkzeug und ein lösbar daran befestigter Schneideinsatz mit helixförmigen Gegenpassflächen bekannt. Die Stützflächen des Grundkörpers des Schneidwerkzeugs und die komplementären Kontaktflächen an den Schneideinsätzen sind konisch ausgebildet, was fertigungstechnisch sehr aufwändig ist. Der Schneideinsatz wird durch einen Zapfen im Schneidwerkzeug zentriert, was ebenfalls einen erhöhten Fertigungsaufwand darstellt. Die Befestigung des Schneideinsatzes im Grundkörper des Schneidwerkzeugs erfolgt durch die elastische Vorspannung des Grundkörpers in Verbindung mit der konischen Ausbildung der Stützflächen und der Kontaktflächen.

Aus der WO2015193874 A1 sind ein zusammengesetztes Schneidwerkzeug und ein lösbar daran befestigter Schneideinsatz mit helixförmigen Spanflächen bekannt. Der Schneideinsatz kann ohne Verschraubung fixiert und gelöst werden. Dies erfordert im Vergleich zu anderen Befestigungskonzepten eines Schneideinsatzes geringere Spannkräfte des Schneideinsatzes. Bei hohen Bearbeitungskräften, hervorgerufen durch hochfeste Werkstück-Werkstoffe oder einen fortschreitenden Verschleiß der Schneidkaten des Schneideinsatzes, oder Werkzeugschwingungen im Bohrprozess, oder dem Rückzug des Werkzeugs aus der erzeugten Bohrung können diese Spannkräfte überschritten werden und sich der Schneideinsatz aus seinem Sitz lösen, was den Einsatzbereich des Werkzeugkonzepts begrenzt.

Aus der DE 10 2009 044 995 A1 ist ein Schneidwerkzeug mit austauschbarem Schneideinsatz bekannt. Der Schneideinsatz wird über ein zentral angeordnetes Röhrchen in der Art einer Passhülse zentriert. In axialer Richtung wird der Schneideinsatz gesichert, indem er nach dem Einführen in eine Aufnahme des Schneidwerkzeugs gegen die Arbeits-Drehrichtung des Schneidwerkzeugs relativ zu dem Schneidwerkzeug geschwenkt wird, so dass ein Teil des Schneideinsatzes in eine komplementäre Ausnehmung des Schneidwerkzeugs eintaucht und auf diese Weise formschlüssig in axialer Richtung gegen Herausfallen gesichert.

Aus der US 7 556 458 B2 ist ein Schneidwerkzeug mit austauschbarem Schneideinsatz bekannt. Der Schneideinsatz wird über einen zentral angeordneten Zapfen in einer komplementären Zentralbohrung des Schneidwerkzeugs zentriert. Auch bei diesem Schneidwerkzeug wird der Schneideinsatz gegen Herausfallen gesichert, indem er nach dem Einführen in eine Aufnahme des Schneidwerkzeugs gegen die Arbeits-Drehrichtung des Schneidwerkzeugs relativ zu dem Schneidwerkzeug geschwenkt wird, so dass eine in Drehrichtung über eine Kontaktfläche hinausragende Nase in eine komplementäre Nut des Schneidwerkzeugs eintaucht.

Der Erfindung liegt die Aufgabe zugrunde, ein Bohrwerkzeug mit Wechselschneidplatte und eine zugehörige Wechselschneidplatte bereitzustellen, welche die Nachteile des Standes der Technik überwindet. Insbesondere sollen die Zentrierung und Ausrichtung der Wechselschneidplatte im Bohrwerkzeug mit sehr großer Wiederholgenauigkeit erfolgen. Das Auswechseln der Wechselschneidplatte soll einfach und auch unter den Bedingungen der industriellen Großserien-Fertigung einfach und zuverlässig möglich sein.

Diese Aufgabe wird erfindungsgemäß bei einem Bohrwerkzeug mit Wechselschneidplatte mit den Merkmalen des Anspruchs 1 gelöst.

Durch diese Geometrie wird eine besonders gute Drehmomentübertragung vom Bohrwerkzeug auf die Schneidplatte erreicht; die Schneidplatte lässt sich rasch und leicht auswechseln und das Fixieren der Schneidplatte in dem Bohrwerkzeug ist auch unter den beengten Verhältnissen im Arbeitsraum eines Bearbeitungszentrums gut möglich.

Bevorzugt verlaufen die Zentrierflächen beider Mitnehmer parallel zueinander. Dadurch wird die Zentrierung und Ausrichtung der Schneidplatte in dem Bohrwerkzeug weiter verbessert.

Die Normalenvektoren der Zentrierflächen verlaufen ebenfalls orthogonal zur Längsachse des Bohrwerkzeugs.

Durch die erfindungsgemäße Ausgestaltung des Bohrwerkzeugs entsteht zwischen den Mitnehmern ein prismatischer Raum, der einen komplementär geformten prismatischen Befestigungsabschnitt einer Wechselschneidplatte aufnehmen kann. Die zum Bohren erforderliche Drehmomentübertragung vom Bohrkopf auf die Wechselschneidplatte erfolgt überwiegend von den Stützflächen der Mitnehmer auf komplementär geformte Kontaktflächen der Wechselschneidplatte.

Die Zentrierung der Wechselschneidplatte relativ zu der Längsachse bzw. der Drehachse des Bohrwerkzeugs erfolgt über die beiden Zentrierflächen und die komplementär geformten Gegenzentrierflächen der Wechselschneidplatte.

Im Ergebnis wird dadurch eine sehr gute Ausrichtung der Wechselschneidplatte in Richtung der Längsachse gewährleistet und gleichzeitig wird die Wechselschneidplatte sehr gut relativ zu der Längsachse des Bohrwerkzeugs zentriert.

Im Ergebnis sind somit hohe Zerspanleistungen bei hohen Standzeiten der Wechselschneidplatte und einer sehr guten Qualität der Bohrungen bezüglich Maß, Geradheit und Oberflächengüte erzielbar.

In einer Ausgestaltung der Erfindung sind die Stützflächen beider Mitnehmer zueinander parallel, und/oder die Passflächen beider Mitnehmer zueinander parallel.

Dadurch ergeben sich unter anderem fertigungstechnische Vorteile. Insbesondere können die Stützflächen beider Mitnehmer beispielsweise in einem Bearbeitungsvorgang mit einem Scheibenfräser hergestellt werden. Dadurch ergibt sich eine sehr hohe Parallelität dieser Stützflächen. Die Zentrierflächen können in einem weiteren Arbeitsschritt mit Hilfe eines Fingerfräsers ebenfalls sehr präzise hergestellt werden, so dass sehr enge Toleranzen bei der Herstellung der Bohrwerkzeuge zuverlässig eingehalten werden. In Verbindung mit ebenfalls eng tolerierten Wechselschneidplatten wird damit exakte Ausrichtung und Zentrierung der Wechselschneidplatten relativ zur Drehachse des Bohrwerkzeugs erreicht.

Eine besonders vorteilhafte Ausgestaltung der Erfindung sieht vor, dass die an einem Mitnehmer vorhandene Stützfläche und die an dem gleichen Mitnehmer vorhandene Passfläche zueinander parallel sind. Dadurch wird die Herstellung sowohl des Bohrwerkzeugs als auch der komplementär geformten Wechselschneidplatte vereinfacht.

Damit zwischen dem Bohrwerkzeug und der Wechselschneidplatte die zur Bohrbearbeitung erforderlichen Vorschubkräfte sicher übertragen werden können, ist am Übergang zwischen Bohrkopf und Mitnehmer zwischen den Mitnehmern eine Basisfläche ausgebildet, wobei die Basisfläche rotationssymmetrisch bezüglich der Längsachse ist. In der Regel ist die Basisfläche eben. Dann ist gewährleistet, dass die von der Basisfläche auf den Befestigungsabschnitt einer Wechselschneidplatte übertragenen Vorschubkräfte nicht zu einem Verkippen der Wechselschneidplatte führen und die Genauigkeit der Bohrbearbeitung weitestgehend unabhängig von der Vorschubkraft ist.

Um die Wechselschneidplatte gegen Verlieren zu sichern, ist in der Basisfläche ein Schlitz vorhanden, der sich ausgehend von der Basisfläche in Richtung des Einspannendes erstreckt. Der Normalenvektor des Schlitzes verläuft etwa in Richtung der Winkelhalbierenden der Normalenvektoren der Stützfläche und der Zentrierfläche eines Mitnehmers.

Senkrecht zu dem Schlitz ist eine gestufte Querbohrung mit einem Innengewinde in dem Bohrkopf vorgesehen. In der Querbohrung befindet sich eine Sicherungsschraube. Wenn die Sicherungsschraube angezogen wird, werden die Mitnehmer des Bohrkopfs geringfügig (weniger als 5/100 Millimeter) zusammengezogen und damit die in dem Zwischenraum zwischen den Mitnehmern befindliche Wechselschneidplatte gegen Verlieren gesichert. Die Sicherung muss so stabil erfolgen, dass die Wechselschneidplatte beim Rückzug des Bohrers nicht aus dem Grundkörper herausgezogen werden kann.

Es sind auch andere Varianten von Verliersicherungen möglich. Beispielsweise ist es möglich, dass in dem Befestigungsabschnitt der Wechselschneidplatte eine Vertiefung ausgearbeitet ist und dass ein federbelasteter Sicherungsstift, der an dem Bohrkopf befestigt ist, in die Vertiefung einfährt, wenn die Wechselschneidplatte in den Bohrkopf eingeschoben wird.

Es hat sich als vorteilhaft erwiesen, wenn die Zentrierfläche mit der Stützfläche einen Winkel α zwischen 105° und 75°, bevorzugt einen Winkel α von 90° einschließt. Dadurch ist eine bestmögliche Zentrierung der Wechselschneidplatte zwischen den Mitnehmern des Bohrkopfs gewährleistet.

Die eingangs genannte Aufgabe wird ebenfalls gelöst durch eine Wechselschneidplatte mit den Merkmalen des Anspruchs 10.

Weil der Befestigungsabschnitt der erfindungsgemäßen Wechselschneidplatte komplementär zu den Mitnehmern des Bohrkopfs gestaltet ist, ergeben sich Übereinstimmungen zwischen den auf das Bohrwerkzeug und den auf die Wechselschneidplatte gerichteten Patentansprüchen. Die dadurch realisierbaren Vorteile stimmen ebenfalls überein.

Weitere Vorteile und vorteilhafte Ausgestaltungen der Erfindung sind der nachfolgenden Zeichnung und deren Beschreibung in den Patentansprüchen entnehmbar.

Es zeigen:
- Figuren 1 und 2: ein Ausführungsbeispiel eines erfindungsgemäßen Bohrwerkzeugs in verschiedenen Isometrien;
- Figur 3: eine Seitenansicht eines erfindungsgemäßen Bohrwerkzeugs ohne Wechselschneidplatte;
- Figuren 4: bis 6 verschiedene Isometrien des Bohrkopfs des erfindungsgemäßen Bohrwerkzeugs;
- Figur 7: eine Ansicht von vorne auf den Bohrkopf;
- Figuren 8: bis 11 verschiedene Isometrien eines Ausführungsbeispiels einer erfindungsgemäßen Wechselschneidplatte;
- Figur 12: eine Ansicht auf die Bohrerspitze der erfindungsgemäßen Wechselschneidplatte;
- Figur 13: eine Ansicht von unten auf die erfindungsgemäße Wechselschneidplatte;
- Figur 14: eine Seitenansicht eines erfindungsgemäßen Bohrwerkzeugs mit eingesetzter Wechselschneidplatte;
- Figur 15: eine weitere Isometrie des erfindungsgemäßen Bohrwerkzeugs mit eingesetzter Wechselschneidplatte und
- Figur 16: eine Ansicht auf die Bohrerspitze des erfindungsgemäßen Bohrwerkzeugs mit eingesetzter Wechselschneidplatte,
- Figur 17: einen Längsschnitt durch den Bohrkopf und
- Figur 18: einen Querschnitt durch das Bohrwerkzeug auf Höhe der Sicherungsschraube.

### Beschreibung der Ausführungsbeispiele

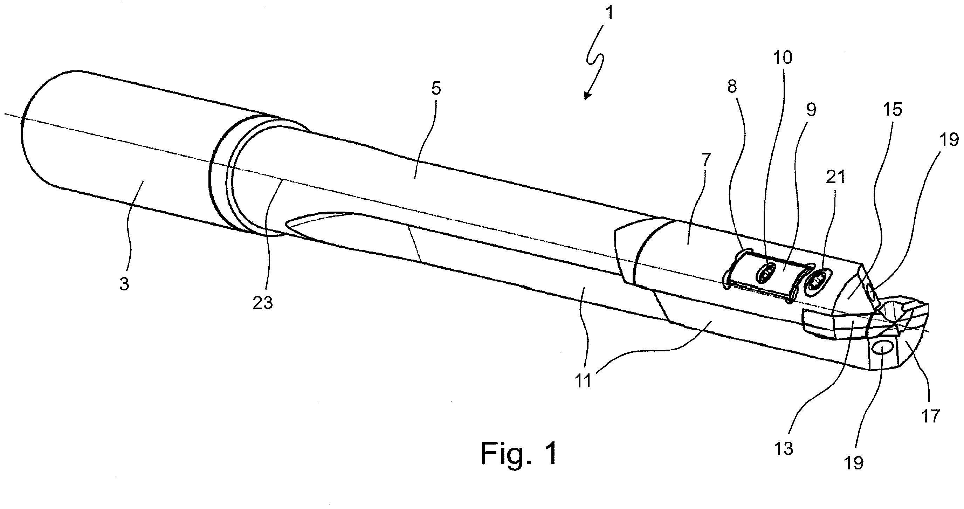

Im Zusammenhang mit den Figuren 1 bis 18 werden zwei Ausführungsbeispiele erfindungsgemäßer Bohrwerkzeuge und einer dazugehörigen Wechselschneidplatte dargestellt.

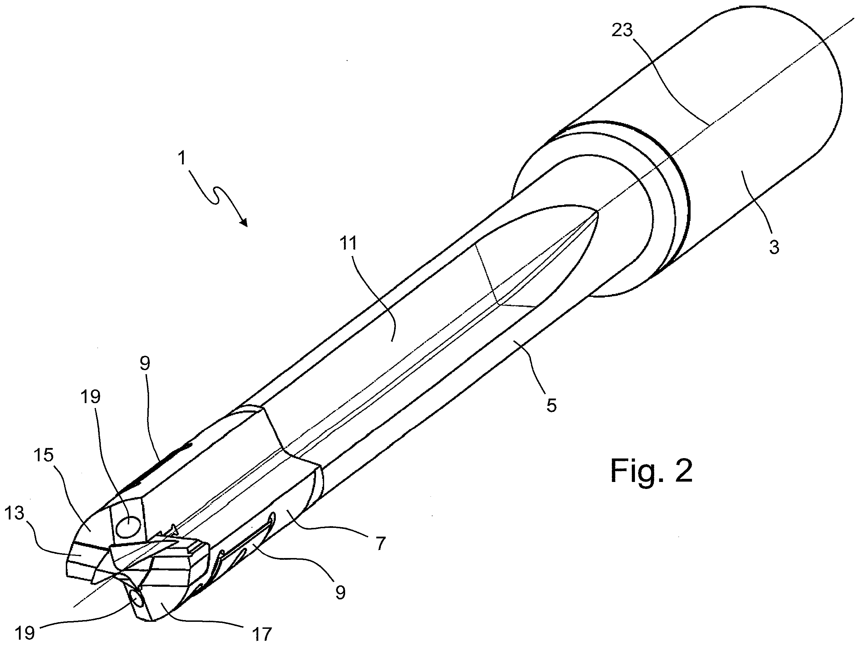

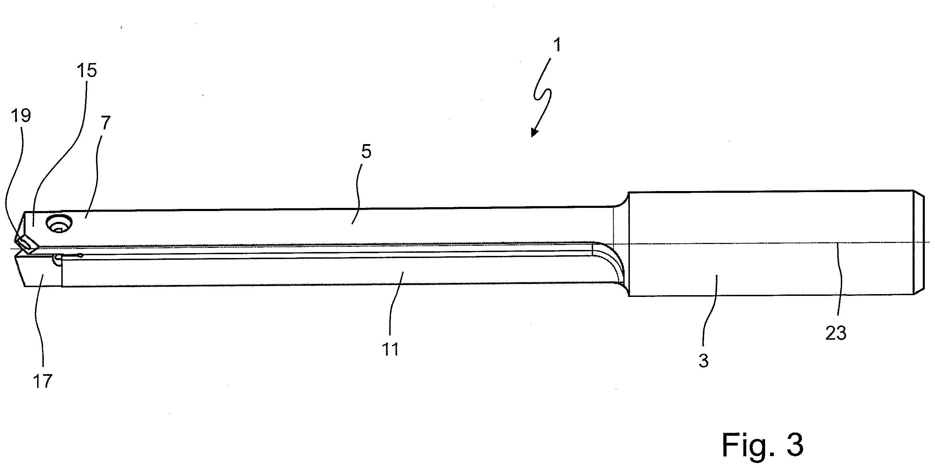

Das erste Ausführungsbeispiel (Figuren 1 und 2) zeigt ein mehrteiliges Werkzeug vorwiegend für größere Bohrtiefen, zusätzlich mit Führungsleisten. Das zweite Ausführungsbeispiel (Figuren 3, 4, 14 und 15) zeigt ein einteiliges Werkzeug vorwiegend für kleinere Bohrtiefen.

Die formschlüssige Verbindung zwischen dem Bohrkopf und der Wechselschneidplatte ist bei beiden Ausführungsbeispielen immer gleich.

Die Figur 1 zeigt ein erfindungsgemäßes Bohrwerkzeug 1 in einer Isometrie, das aus mehreren Teilen zusammengesetzt ist. Das Bohrwerkzeug 1 umfasst ein Einspannende 3, einen Schaft 5 und einen Bohrkopf 7.

In dieser Darstellung handelt es sich um ein gebautes Bohrwerkzeug, bei denen Einspannende 3, Schaft 5 und Bohrkopf 7 aus verschiedenen Bauteilen bestehen und beispielsweise durch Löten miteinander verbunden sind. Diese Ausführung kommt vorrangig zum Einsatz, wenn die Werkzeuglänge das ca. 8- bis 12-fache des Bohrdurchmessers übersteigt. Auf diese Weise können Längen bis über dem 100-fachen des Bohrdurchmessers realisiert werden.

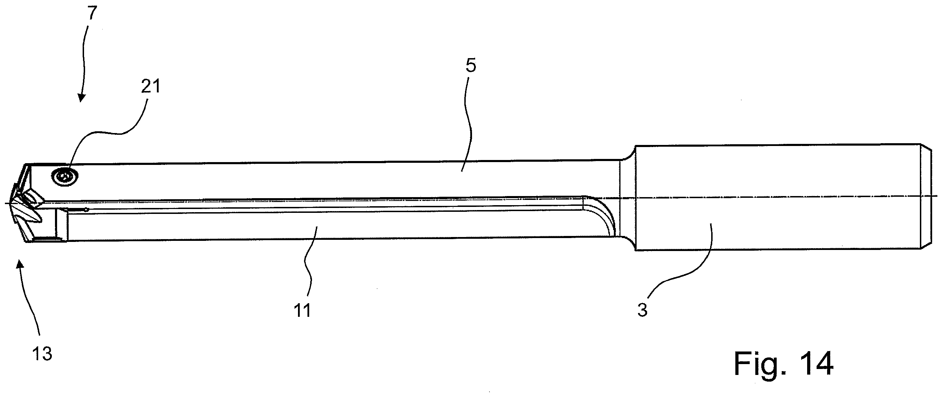

Das erfindungsgemäße Bohrwerkzeug kann auch einteilig ausgeführt sein, wie dies beispielsweise in der Figuren 3 und 14 dargestellt ist. Dann werden Einspannende 3, Schaft 5 und Bohrkopf 7 aus einem Stück gefertigt.

Bei dem in Figur 1 dargestellten Ausführungsbeispiel ist eine auswechselbare Führungsleiste 9 am Bohrkopf 7 angeordnet. Sie wird mit einer Schraube 10 in einer Ausnehmung 8 im Bohrkopf 7 aufgenommen. Häufig verläuft ein Grund der Ausnehmung 8 nicht exakt parallel zur Längsachse 23 des Bohrwerkzeugs, sondern wird leicht schräg gestellt, so dass das vordere Ende der Führungsleiste 9 während der Bohrbearbeitung auf einem etwas größeren Durchmesser als das hintere Ende rotiert. Dadurch wird die Kontaktfläche zwischen Bohrung und Führungsleiste 9 auf das vordere Ende beschränkt. Wenn das vordere Ende der Führungsleiste 9 verschlissen ist, kann die Führungsleiste 9 einmal um 180° gedreht werden, so dass das ehemals hintere und nicht verschlissene Ende an das vordere Ende der Ausnehmung 8 gelangt.

Die Führungsleiste 9 wird mittels einer Schraube 10 in der Ausnehmung 8 gehalten. Die Schraube 10 wird in ein in Figur 1 nicht sichtbares Innengewinde in dem Bohrkopf 7 eingedreht. Wenn die Führungsleiste 9 verschlissen ist, wird sie durch eine neue ersetzt. Diese Ausführung ist ebenfalls vorrangig für Werkzeuge sinnvoll, deren Länge das ca. 8- bis 12-fache des Werkzeugdurchmessers überschreitet. Ebenso kann sie auch bei kürzeren Werkzeugen zum Einsatz kommen, wenn besonders hohe Anforderungen an die Geradheit der Bohrung gestellt werden.

In dem Schaft 5 und dem Bohrkopf 7 sind zwei Spannuten 11 ausgebildet, von denen in der Figur 1 jedoch nur eine sichtbar ist. An dem vorderen Ende des Bohrwerkzeugs 1 ist eine erfindungsgemäße Wechselschneidplatte 13 vorhanden, die formschlüssig zwischen zwei Mitnehmern 15 und 17 gehalten wird. In der Figur 1 sind die Schneiden der Wechselschneidplatte 13 gut zu erkennen. Weiter sind in den Mitnehmern 15 und 17 Kühlkanäle 19 erkennbar.

Die Kühlkanäle 19 erstrecken sich durch den Bohrkopf 7 und den Schaft 5 in an sich bekannter Weise.

Die in der Figur 1 dargestellte Sicherungsschraube 21 dient dazu, die Wechselschneidplatte 13 im Bohrkopf 7 zu klemmen. Dazu werden die Mitnehmer 15 und 17 bei eingesetzter Wechselschneidplatte 13 mit Hilfe der Sicherungsschraube 21 ganz leicht aufeinander zu bewegt. Das Klemmen verhindert ein Lösen der Wechselschneidplatte 13 aus dem Bohrkopf 7 und stellt die formschlüssige Positionierung der Wechselschneidplatte 13 im Bohrkopf 7 sicher. Mit 23 ist eine Längsachse des Bohrwerkzeugs 1 bezeichnet.

In der Figur 2 ist das Bohrwerkzeug 1 aus einer anderen Perspektive dargestellt. Die konstruktiven Details werden anhand der Figuren 3ff näher erläutert.

Die Figur 3 zeigt eine Seitenansicht des zweiten Ausführungsbeispiels eines erfindungsgemäßen Bohrwerkzeugs 1 ohne Wechselschneidplatte 13 und ohne Sicherungsschraube 21.

Es ist bevorzugt, wenn die Sicherungsschraube 21 die Wechselschneidplatte 13 nicht in einer Weise durchdringt, dass eine Bohrung in der Wechselschneidplatte 13 erforderlich wird. Das Einbringen einer Bohrung in eine aus einem sehr harten Werkstoff bestehenden Wechselschneidplatte 13 ist aufwendig und teuer. Sie schwächt außerdem die Wechselschneidplatte 13. Dadurch benötigen Bohrwerkzeuge deren Wechselschneidplatte durchbohrt ist, einen gewissen Mindestdurchmesser.

Die erfindungsgemäßen Bohrwerkzeuge unterliegen dieser Restriktion nicht, was deren Einsatzbereich hin zu kleineren Bohrdurchmessern erweitert.

Weil die Sicherungsschraube bei dem erfindungsgemäßen Bohrwerkzeug 1 die Wechselschneidplatte 13 nicht durchdringt, muss zum Auswechseln einer Wechselschneidplatte 13 mit oder ohne Ausnehmung 45 die Sicherungsschraube 21 nicht aus dem Bohrkopf 7 herausgedreht werden, sondern es reicht aus, wenn die Sicherungsschraube 21 etwas gelöst wird. Dann wird die Klemmung der Wechselschneidplatte 13 zwischen den Mitnehmern 15 und 17 aufgehoben und die Wechselschneidplatte 13 kann ohne weiteres nach vorne aus dem Bohrkopf 7 herausgezogen werden.

Es ist bevorzugt, wenn die Wechselschneidplatte 13 an ihrem den Schneiden gegenüberliegenden Ende eine offene Ausnehmung 45 aufweist. Durch die optionale Ausnehmung 45 wird erreicht, dass der Abstand der Schraube zur Bohrerspitze so klein wie möglich wird, was die Klemmung der Wechselschneidplatte 13 im Bohrkopf 7 verbessert, ohne eine Bohrung in die Wechselschneidplatte 7 einbringen zu müssen.

Bei dem in Figur 3 dargestellten zweiten Ausführungsbeispiel sind Einspannende 3, Schaft 5 und Bohrkopf 7 aus einem Stück gefertigt.

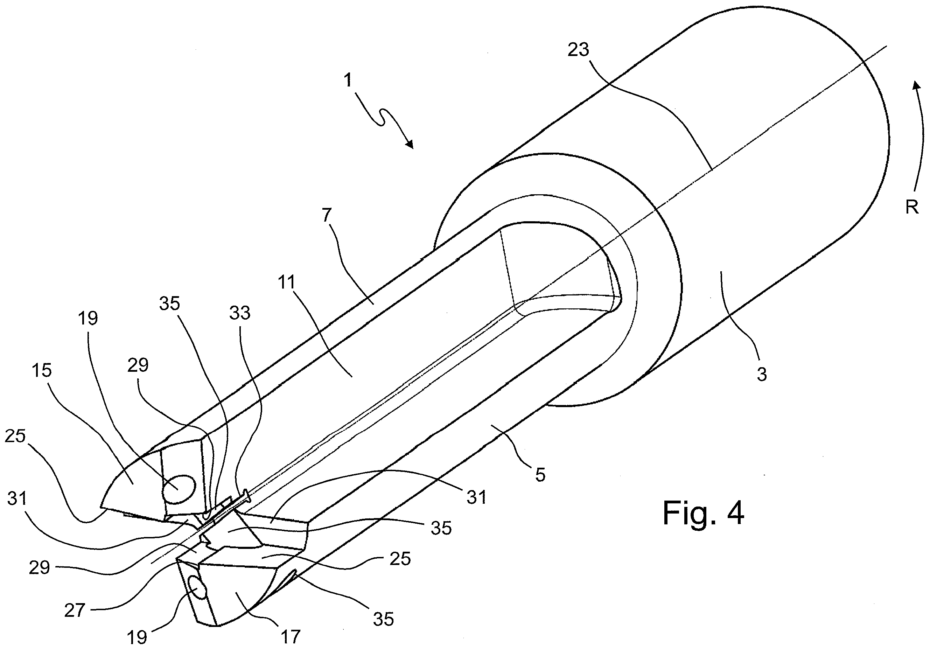

In der Figur 4 ist eine Isometrie auf den Bohrkopf 7 mit den beiden Mitnehmern 15 und 17 etwas vergrößert dargestellt. Zwischen den beiden Mitnehmern 15 und 17 ist ein prismatischer Raum ausgespart, in den der ebenfalls prismatische Befestigungsabschnitt der nicht dargestellten Wechselschneidplatte eingeführt werden kann. Das Einführen der Wechselschneidplatte erfolgt von der Spitze des Bohrwerkzeugs 1 in Richtung der Längsachse 23 des Bohrwerkzeugs 1. Die Längsachse 23 ist gleichzeitig auch die Drehachse des Bohrwerkzeugs 1. Der Mitnehmer 17 ist zentralsymmetrisch zu dem Mitnehmer 15. Das heißt, er hat die gleichen Funktionsflächen. Allerdings sind diese Flächen in der Figur 4 nicht gut zu erkennen.

Eine Drehrichtung des Bohrwerkzeugs 1 ist durch den gekrümmten Pfeil R angedeutet.

Der Mitnehmer 17 weist eine Stützfläche 25 und eine Passfläche 29 auf. Die Stützfläche 25 und die Passfläche 29 eines Mitnehmers 15 oder 17 sind bei diesem Ausführungsbeispiel parallel zueinander. Das muss aber nicht so sein. Die Stützfläche 25 und die Passfläche 29 eines Mitnehmers 15 oder 17 können auch Winkel zwischen 180° und 135 ° einschließen (nicht dargestellt).

Zwischen der Stützfläche 25 und der Passfläche 29 ist eine Zentrierfläche 27 ausgebildet, die letztendlich den Abstand "überbrückt", der zwischen der Stützfläche 25 und der Passfläche 29 an den Mitnehmern 15, 17 vorhanden ist.

Die Stützfläche 25, die Zentrierfläche 27 und die Passfläche 29 des Mitnehmers 17 bilden zusammen mit den entsprechenden Flächen 25, 27 und 29 des Mitnehmers 15 einen prismatischen Raum, in den die nicht dargestellte Wechselschneidplatte eingesetzt werden kann.

Die Zentrierung und Ausrichtung der Wechselschneidplatte 13 relativ zu der Längsachse 23 des Bohrkopfs 7 erfolgt nahezu ausschließlich über die Stützfläche 25 und die Zentrierfläche 27 der Mitnehmer 17. Die Passfläche 29 übernimmt in diesem Zusammenhang keine oder nur eine sehr untergeordnete Funktion. Es ist daher möglich auf die Passfläche 29 und die komplementäre Gegenpassfläche 41 der Wechselschneidplatte 13 zu verzichten.

Am Grunde dieses o. g. prismatischen Raums befindet sich eine Basisfläche 31, die als ebene Fläche ausgebildet ist. Die Basisfläche 31 dient als Endanschlag für die Wechselschneidplatte 13 und überträgt die Vorschubkräfte vom Bohrwerkzeug 1 auf die Wechselschneidplatte 13.

Das zur Zerspanung erforderliche Drehmoment wird im Wesentlichen über die beiden Stützflächen 25 der Mitnehmer 15 und 17 und zu einem geringen Teil von den beiden Zentrierflächen 27 der Mitnehmer 15 und 17 übertragen. Die Zentrierung der Wechselschneidplatte relativ zu der Längsachse 23 des Bohrwerkzeugs 1 und die Ausrichtung der Wechselschneidplatte 13 in Richtung der Längsachse 23 erfolgt überwiegend durch die Zentrierflächen 27 der Mitnehmer 15 und 17.

Die beiden Zentrierflächen 27 der Mitnehmer 15 und 17 verhindern auch, dass die Wechselschneidplatte 13 den Kontakt zu den Stützflächen 25 verliert.

In der Figur 4 ist gut zu erkennen, dass die Basisfläche 31 durch einen Schlitz 33 unterbrochen wird. Senkrecht zu dem Schlitz 33 verläuft eine Querbohrung 35, die als Stufenbohrung ausgebildet ist und die beiden Mitnehmer 15 und 17 mindestens teilweise durchdringt. Die Details der Mitnehmer 15 und 17 werden nachfolgend noch in weiteren Darstellungen deutlich gemacht.

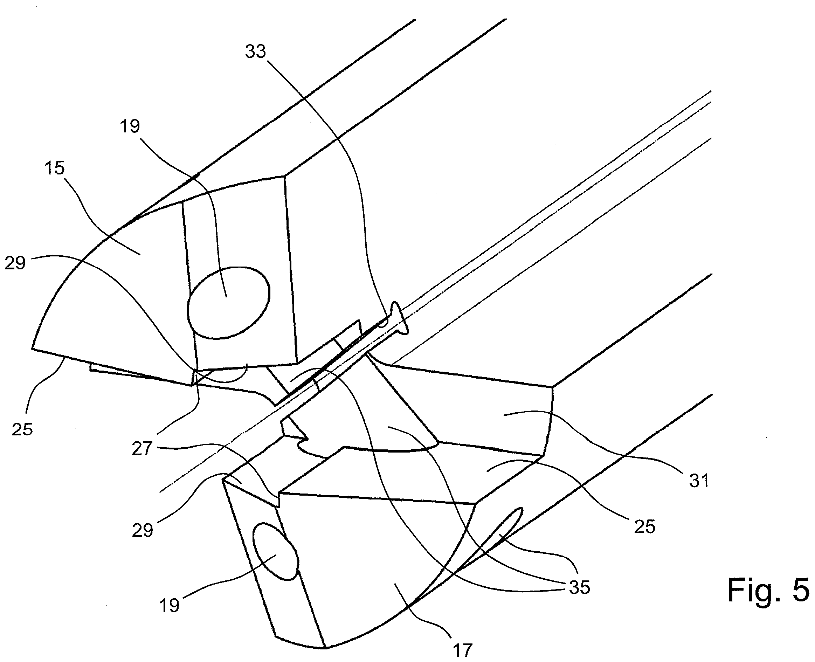

Die Figur 5 stellt eine nochmals vergrößerte Darstellung der Spitze des Bohrkopfs 7 gemäß Figur 4 dar.

In der Figur 5 ist deutlich zu erkennen, dass die Querbohrung 35 eine Stufenbohrung ist. Der Durchmesser der Querbohrung 35 im Mitnehmer 17 ist größer als im Mitnehmer 15.

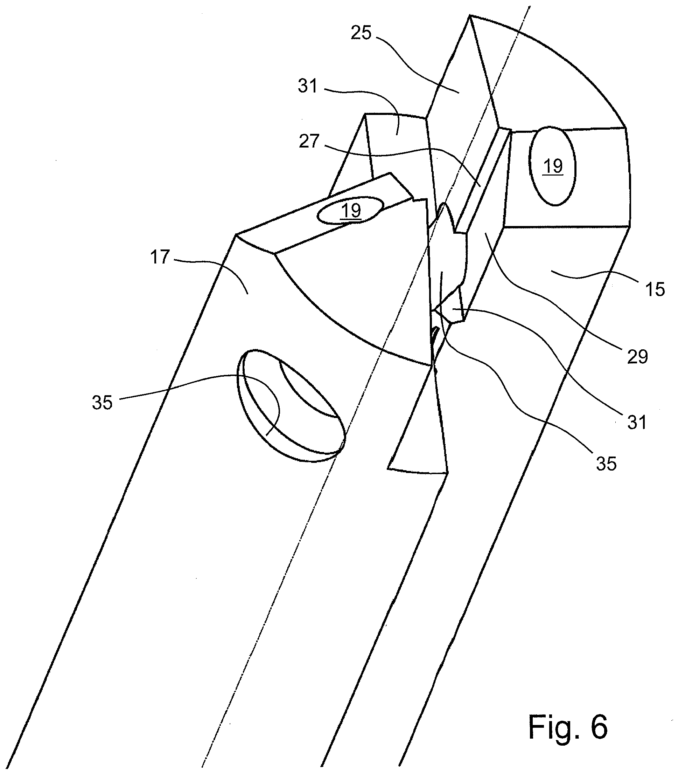

In der Figur 6 ist ebenfalls vergrößert die Spitze des Bohrkopfs 7 in einer anderen Isometrie dargestellt.

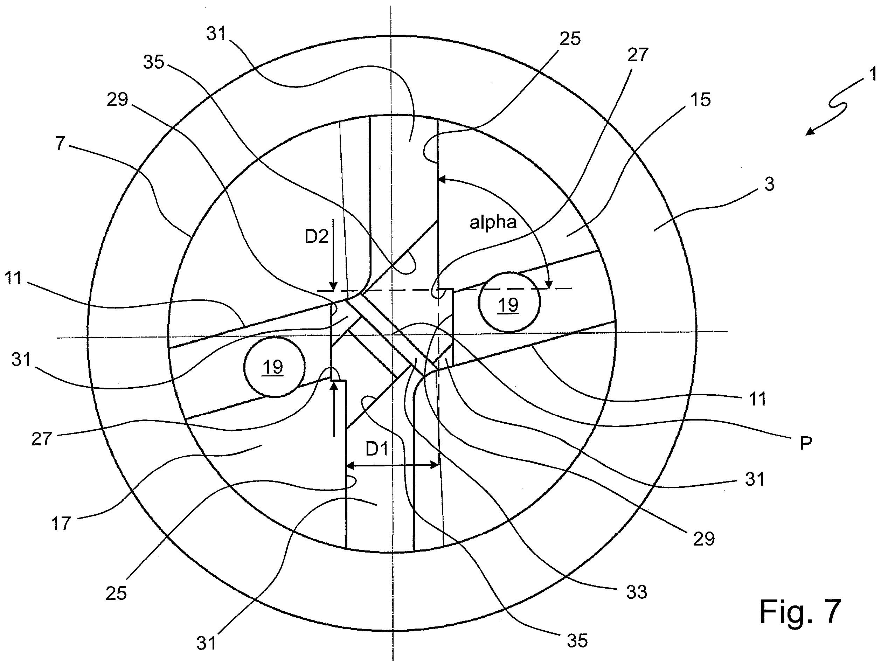

In der Figur 7 ist eine Ansicht von vorne auf den Bohrkopf 7 bzw. das Bohrwerkzeug 1 dargestellt. In dieser Ansicht ist gut zu erkennen, dass die Stützflächen 25 und die Passflächen 29 jeweils eines Mitnehmers 15, 17 parallel zueinander verlaufen.

Der Abstand der Stützflächen 25 und Passflächen 29 wird durch die Zentrierfläche 27 überbrückt. Bei diesem Ausführungsbeispiel schließen die Stützfläche 25 und die Zentrierfläche 27 einen Winkel alpha von 90° ein. Dieser Winkel kann auch variieren; bevorzugt liegt er zwischen 120° und 60°.

In der Figur 7 ist gut zu erkennen, dass die Mitnehmer 15 und 17 zentralsymmetrisch zueinander angeordnet sind. Der Symmetriepunkt P liegt in der Längsachse 23 des Bohrwerkzeugs 1.

In der Figur 7 ist auch gut zu erkennen, dass die beiden Stützflächen 25 der Mitnehmer 15 und 17 zueinander parallel sind. Das Gleiche gilt bezüglich der Zentrierflächen 27 beider Mitnehmer 15 und 17 und der Passflächen 29 der Mitnehmer 15 und 17. Das ergibt sich aus der Zentralsymmetrie der Mitnehmer 15, 17.

Ein Abstand zwischen den Stützflächen 25 beider Mitnehmer 15 und 17 ist in der Figur 7 mit D₁ eingetragen. Der Abstand der Zentrierflächen 27 beider Mitnehmer 15 und 17 ist mit D₂ bezeichnet. Aus Gründen der Übersichtlichkeit wurde der Abstand der Passflächen 29 beider Mitnehmer 15 und 17 in der Figur 7 nicht eingetragen.

Die Basisfläche 31 besteht aus vier Segmenten, weil die Basisfläche 31 durch den Schlitz 33 und durch die als Stufenbohrung ausgeführte Querbohrung 35 unterbrochen wird.

Die Basisfläche 31 wird begrenzt einerseits durch die Spannuten 11 sowie die Stützflächen 25, 27 und 29 beider Mitnehmer 15 und 17.

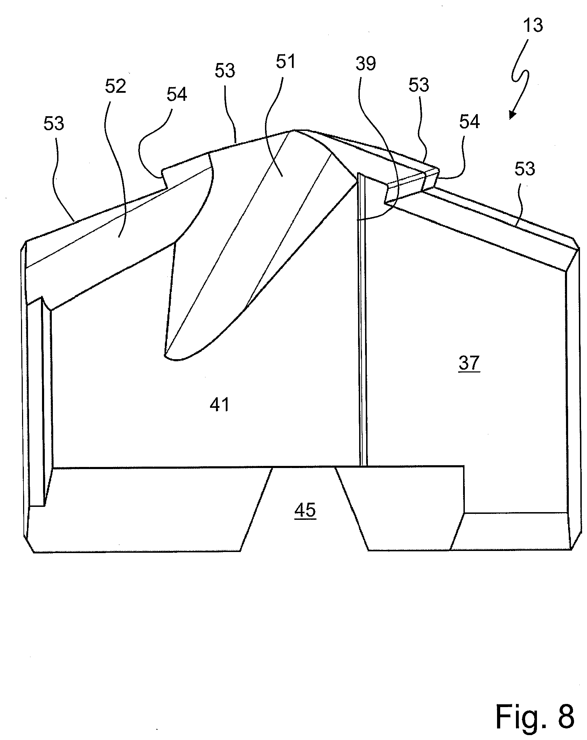

In der Figur 8 ist eine Isometrie einer erfindungsgemäßen Wechselschneidplatte 13 dargestellt, die mit dem Bohrkopf 7 des Bohrwerkzeugs 1 kompatibel ist.

Die gewählten Schneidengeometrien, die sich naturgemäß an der Spitze der Wechselschneidplatte 13 befinden, sind lediglich beispielhaft. Es können auch andere Schneidengeometrien und Spanformer 52 sowie Spanteiler 54 an einer erfindungsgemäßen Wechselschneidplatte 13 ausgebildet sein.

Die Wechselschneidplatte 13 ist mit Ausnahme der Spitze ein prismatischer Körper, der durch mehrere Flächen begrenzt wird. In der Figur 8 sind eine Kontaktfläche 37, eine Gegenzentrierfläche 39 und eine Gegenpassfläche 41 erkennbar.

In der Figur 8 wird auch deutlich, dass das untere Ende der Wechselschneidplatte 13 eine Ausnehmung 45 aufweist. Diese Ausnehmung 45 schafft Platz für eine in der Querbohrung 35 angeordnete Sicherungsschraube 21.

In der Figur 8 sind ebenfalls gut zu erkennen die Hauptschneiden 53, ein Spanformer 52, sowie Spanteiler 54 der Wechselschneidplatte 13. Die dargestellte Schneidengeometrie ist als Beispiel, nicht aber als Beschränkung zu verstehen.

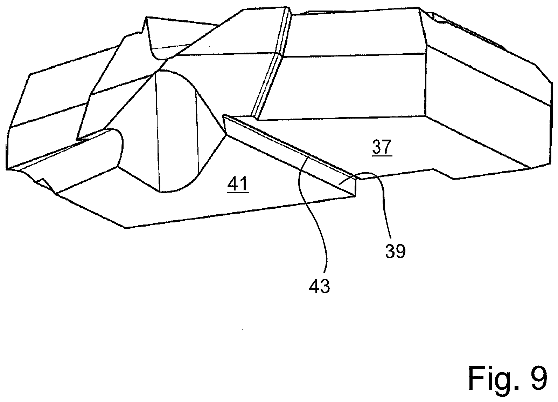

In der Figur 9 sind diese Flächen 37, 39 und 41 noch besser zu erkennen. In der Figur 9 ist besonders gut zu erkennen, dass am Übergang zwischen der Kontaktfläche 37 und der Gegenzentrierfläche 39 ein Freistich 43 ausgebildet ist. Dieser Freistich 43 gewährleistet, dass die Flächen 37 und 39 flächig an der Stützfläche 25 sowie der Zentrierfläche 27 der Mitnehmer 15 und 17 des Bohrkopfs anliegen und verbessern die Montierbarkeit der Wechselschneidplatte 13.

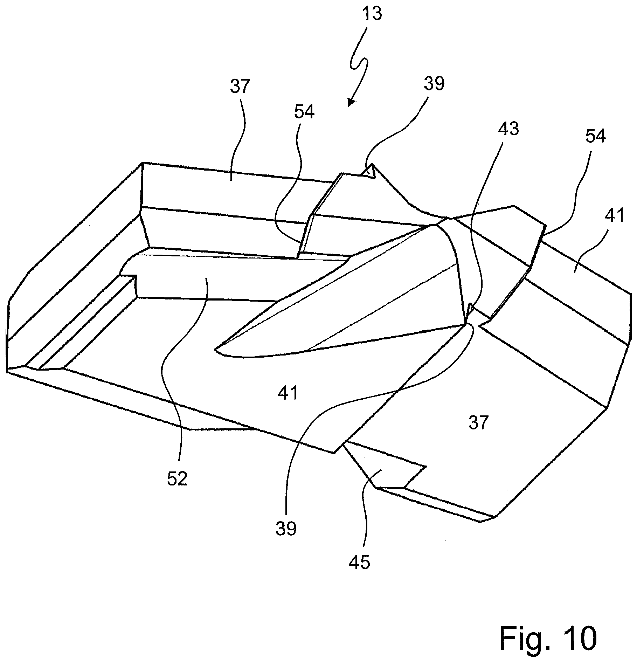

Die Figur 10 zeigt eine weitere Isometrie einer erfindungsgemäßen Wechselschneidplatte 13.

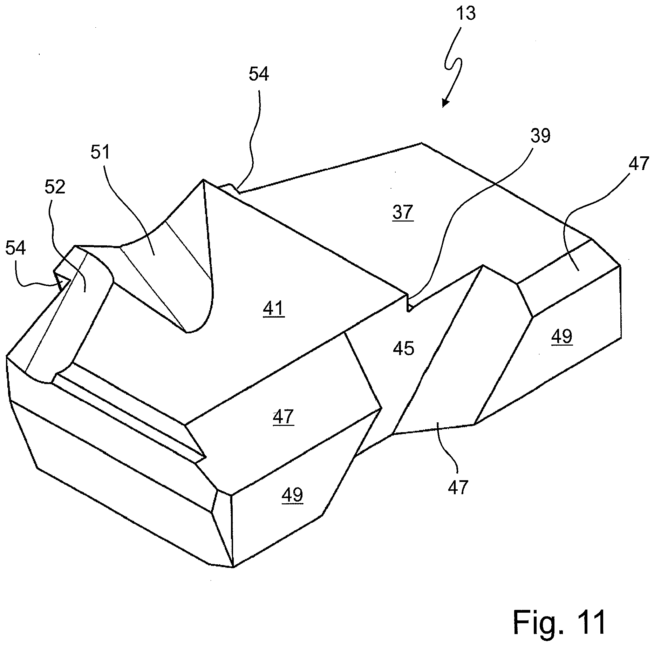

In der Figur 11 ist die Wechselschneidplatte schräg von unten dargestellt. In dieser Ansicht kann man die zum Ende der Wechselschneidplatte offene Ausnehmung 45 gut erkennen.

Es ist auch weiter zu erkennen, dass das untere Ende der Wechselschneidplatte 13 Schrägen 47 aufweist, die das Einführen der Wechselschneidplatte zwischen die beiden Mitnehmer 15 und 17 des Bohrkopfs 7 erleichtern. Zwischen den Schrägen 47 ist eine von der Ausnehmung 45 unterbrochene Endfläche 49 vorhanden. Die Endfläche 49 liegt auf der Basisfläche 31 des Bohrkopfs 7 auf, wenn die Wechselschneidplatte 13 in den Bohrkopf 7 eingeführt ist.

In der Figur 11 ist weiter zu erkennen, dass am oberen Ende der Wechselschneidplatte 13 ein Spanformer 52 in der Gegenpassfläche 41 ausgeformt ist. Des Weiteren ist zu erkennen, dass im Zentrum des vorderen Bereichs der Wechselschneidplatte 13 eine Nut 51 aus den Gegenpassflächen 41 ausgespart ist. Dieses sogenannte "Ausspitzen" reduziert die beim Bohren auftretenden Kräfte.

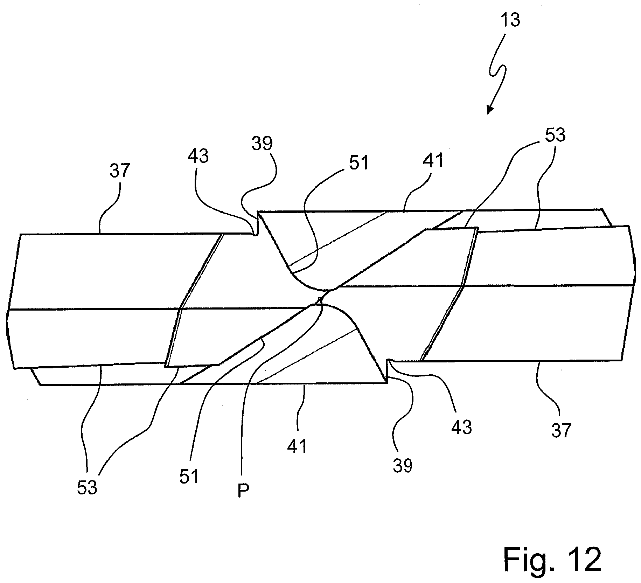

In der Figur 12 ist eine Ansicht auf die Bohrerspitze bzw. die Spitze der Wechselschneidplatte 13 dargestellt. In dieser Ansicht wird deutlich, dass die Kontaktfläche 37, die Gegenzentrierflächen 39 und die Gegenpassfläche 41 komplementär zu den Stützflächen 25, den Zentrierflächen 27 und den Passflächen 29 der Mitnehmer 15 und 17 ausgebildet sind. Dies bedeutet, dass die Wechselschneidplatte 13 von oben in den Bohrkopf 7 zwischen die Mitnehmer 15 und 17 eingeführt werden kann.

Dabei ist es vorteilhaft, wenn sich ein spielarmer Schiebesitz zwischen den Mitnehmern 15 und 17 und dem Befestigungsabschitt der Schneidplatte 13 einstellt. Je weniger Spiel auftritt, desto genauer ist die Wechselschneidplatte 13 im Bohrkopf 7 zentriert und ausgerichtet.

Die Hauptschneiden der Wechselschneidplatte 13 sind in der Figur 12 mit 53 bezeichnet.

Aus dieser Ansicht wird deutlich, dass auch die Wechselschneidplatte 13 zentralsymmetrisch bezüglich eines Symmetriepunkts P ist. Dieser Symmetriepunkt P liegt in der Drehachse bzw. der Längsachse des Bohrkopfs.

Wenn man dies berücksichtigt, wird deutlich, dass die Zentrierflächen 27 der Mitnehmer 15 und 17 in Verbindung mit den Gegenzentrierflächen 39 der Wechselschneidplatte 13 für die Zentrierung bzw. die mittige Positionierung der Wechselschneidplatte 13 zwischen den Mitnehmern 15 und 17 sorgen.

Weil die Zentrierflächen 27 der Mitnehmer 15 und 17 ebenso wie die Gegenzentrierflächen 39 der Wechselschneidplatte 13 eine gewisse axiale Erstreckung haben, wird dadurch auch eine Ausrichtung der Wechselschneidplatte in Richtung der Längsachse des Bohrwerkzeugs erreicht.

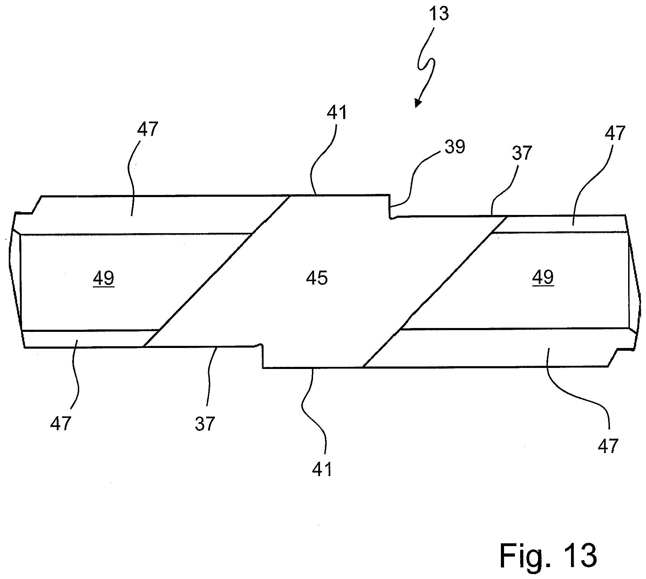

In der Figur 13 ist die Wechselschneidplatte 13 von unten dargestellt. Auch hier ist wieder der prismatische Querschnitt der Wechselschneidplatte 13, der durch die Flächen 37, 39 und 41 begrenzt wird, gut zu erkennen. Auch die Ausnehmung 45, die Einführschrägen 47 und die Endflächen 49 sind gut zu erkennen.

In der Figur 14 ist eine Seitenansicht des erfindungsgemäßen Bohrwerkzeugs 1 mit eingesetzter Wechselschneidplatte 13 dargestellt. Die Wechselschneidplatte 13 wird in der Figur 14 von links in der Längsachse 23 in den von den Mitnehmern 15 und 17 begrenzten Raum eingeführt. Dabei ist eine möglichst spielfreie Passung zwischen den Mitnehmern 15 und 17 sowie der Wechselschneidplatte 13 anzustreben.

Wenn die Endfläche 49 der Wechselschneidplatte 13 auf der Basisfläche 31 des Bohrkopfs aufliegt, hat die Wechselschneidplatte ihre Position erreicht. Sie ist dann sehr präzise ausgerichtet und zentriert. Dies geht im Wesentlichen auf die Zentrierflächen 27 und die Gegenzentrierflächen 39 zurück.

Wenn nun die Sicherungsschraube 21 etwas angezogen wird, dann bewegen sich die Mitnehmer 15 und 17 um wenige Hundertstel Millimeter aufeinander zu und sichern durch eine definierte Klemmung die Wechselschneidplatte 13 gegen das Herausfallen und gegen das Lösen der Wechselschneidplatte 13 aus dem Bohrkopf beim Herausziehen des Bohrwerkzeugs 1 aus den Bohrung. Die zum Zerspanen erforderlichen Kräfte werden nicht von der Sicherungsschraube 21 übertragen. Dies erfolgt vielmehr über die Flächen 25 und beider Mitnehmer 15 und 17 sowie die entsprechenden Gegenflächen 37 und 39 der Wechselschneidplatte 13.

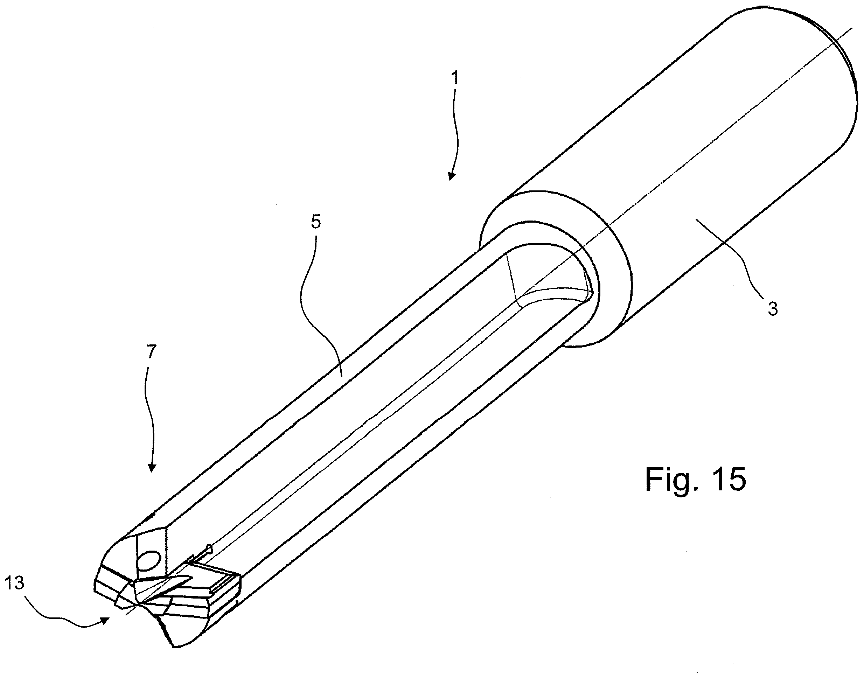

In der Figur 15 ist das erfindungsgemäße Bohrwerkzeug 1 mit eingesetzter Wechselschneidplatte in einer weiteren Ansicht dargestellt.

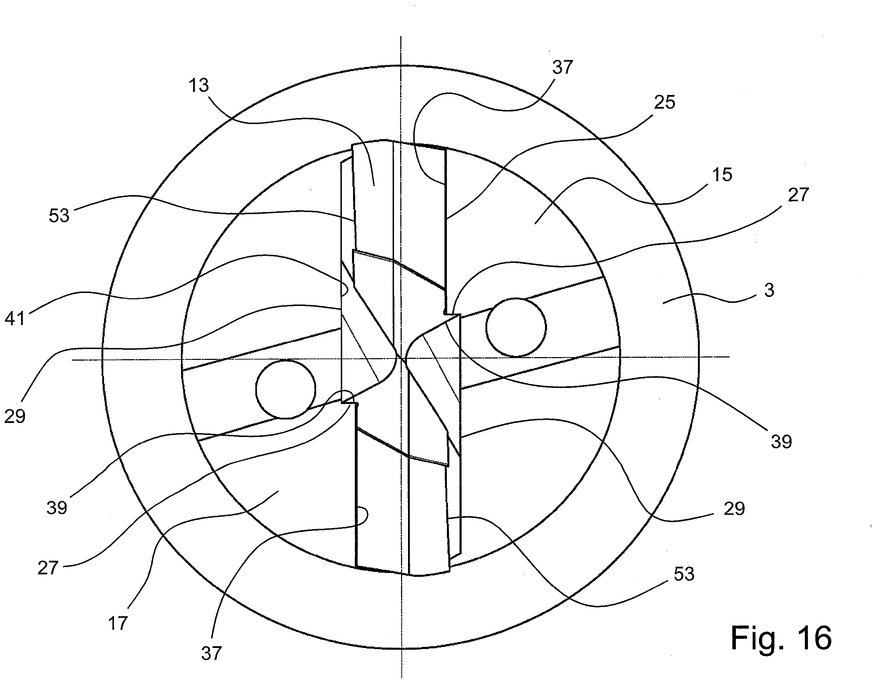

Die Figur 16 zeigt eine Ansicht von vorne auf das erfindungsgemäße Bohrwerkzeug mit eingesetzter Wechselschneidplatte. Aus dieser Darstellung lässt sich sehr gut der Formschluss zwischen Wechselschneidplatte 13 und den Mitnehmern 15 und 17 des Bohrwerkzeugs erkennen. Es wird auch deutlich, welchen Beitrag die Zentrierflächen 27 und die Gegenzentrierflächen 39 zur Positionierung, Ausrichtung und Zentrierung der Wechselschneidplatte 13 relativ zu dem Bohrkopf 7 leisten.

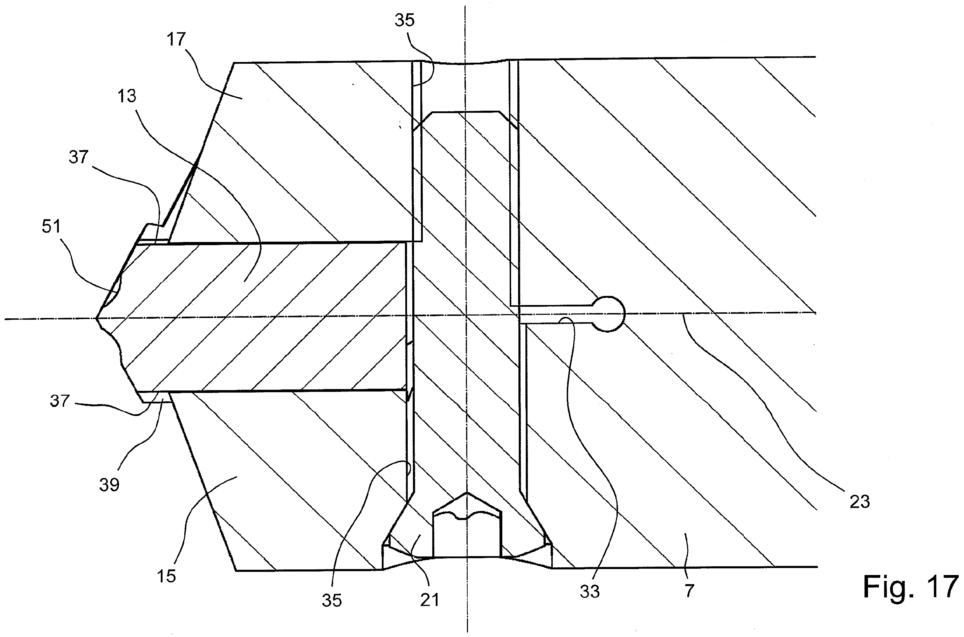

In der Figur 17 ist ein Längsschnitt durch den Bohrkopf 7 mit Wechselschneidplatte 13 und eingedrehter Sicherungsschraube 21 dargestellt. In dieser Ansicht wird deutlich, dass die Querbohrung 35 als Stufenbohrung ausgeführt ist und in dem Mitnehmer 17 ein Innengewinde aufweist in welches die Sicherungsschraube 21 eingedreht wird. Im Mitnehmer 15 ist eine Ansenkung ausgebildet auf welcher der Senkkopf der Sicherungsschraube 21 aufliegt. Durch Anziehen der Sicherungsschraube 21 werden die Mitnehmer 15 und 17 etwas aufeinander zu bewegt. Weil die Mitnehmer 15, 17 die Wechselschneidplatte 13 über eine gewisse Länge in Richtung der Längsachse 23 (axiale Richtung) aufnehmen, wird Wechselschneidplatte 13 relativ zur Längsachse 23 ausgerichtet.

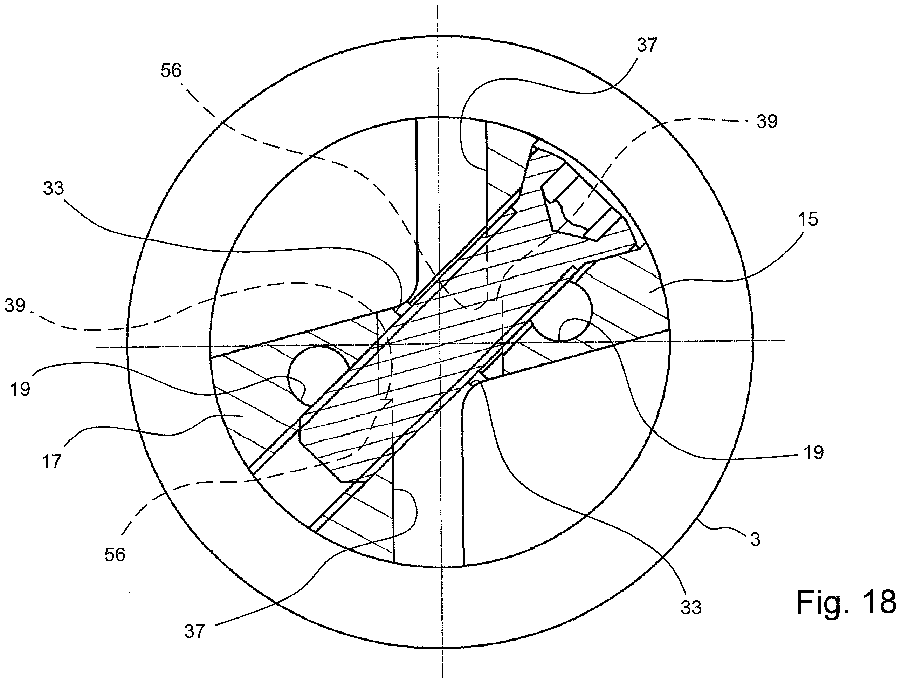

In der Figur 18 ist ein Schnitt durch den Bohrkopf 7 auf Höhe der gestuften Querbohrung 35 ebenfalls mit eingedrehter Sicherungsschraube 21 dargestellt. Die in der Schnittebenen nicht sichtbaren Teile der Stützflächen 25 und der Zentrierflächen 27 als unterbrochene Linien dargestellt. Dadurch lässt sich gut erkennen, dass die Stützflächen 25 und der Zentrierflächen 27 jeweils eine Ecke 56 bilden. Diese beiden Ecken 56 fluchten bei dem dargestellten Ausführungsbeispiel etwa mit der Längsachse der Sicherungsschraube 21 bzw. der Querbohrung 35.

Wenn die Sicherungsschraube 21 angezogen wird, zieht sie die von den Stützflächen 25 und den Zentrierflächen 27 gebildeten Ecken 56 zueinander hin, so dass sie eine Wechselschneidplatte 13 (nicht dargestellt in Figur 18) an ihren komplementären Kontaktflächen 37 und Gegenzentrierflächen einklemmen und sichern.

Die Passflächen 29 der Mitnehmer und die Gegenpassflächen 41 der Wechselschneidplatte 13 werden hierzu nicht benötigt.

## Patentansprüche

1. Bohrwerkzeug mit Wechselschneidplatte (13) umfassend
einen Schaft (5), ein Einspannende (3), einen Bohrkopf (7) und eine Längsachse (23), wobei an dem Bohrkopf (7) eine Aufnahme für die Wechselschneidplatte (13) ausgebildet ist,
wobei die Aufnahme zwei Mitnehmer (15, 17) umfasst,
wobei an jedem Mitnehmer (15, 17) eine Stützfläche (25) ausgebildet ist, wobei die Normalenvektoren der Stützflächen (25) orthogonal zur Längsachse (23) verlaufen,
wobei die Mitnehmer (15, 17) zentralsymmetrisch bezüglich der Längsachse (23) angeordnet sind,
wobei angrenzend an die Stützfläche (25) eines Mitnehmers (15, 17) eine Zentrierfläche (27) ausgebildet ist,
wobei die Zentrierfläche (27) mit der Stützfläche (25) einen Winkel (alpha) zwischen 120° und 60° einschließt,
wobei angrenzend an die Zentrierfläche (27) eine Passfläche (29) ausgebildet ist,
wobei am Übergang zwischen Bohrkopf (7) und Mitnehmern (15, 17) zwischen den Mitnehmern (15, 17) eine Basisfläche (31) ausgebildet ist, und
wobei die Basisfläche (31) rotationssymmetrisch bezüglich der Längsachse (23) ist,
wobei der Bohrkopf (7) Sicherungsmittel zur Sicherung der Wechselschneidplatte (13) gegen Herausfallen aufweist,
wobei die Wechselschneidplatte (13) einen vorderen Abschnitt, einen prismatischen Befestigungsabschnitt und eine Längsachse umfasst,
wobei der vordere Abschnitt eine oder mehrere Schneiden aufweist, und wobei der Befestigungsabschnitt so gestaltet ist, dass er formschlüssig mit den Mitnehmern (15, 17) des Bohrwerkzeugs (7) zusammenwirkt,
**dadurch gekennzeichnet, dass** die Sicherungsmittel eine als Stufenbohrung in dem Bohrkopf (7) ausgebildete Querbohrung (35) umfassen,
dass die Querbohrung (35) beide Mitnehmer (15, 17) durchdringt,
dass die Querbohrung (35) ein Innengewinde in einem Mitnehmer (17) aufweist,
und
dass an einem Ende des Befestigungsabschnitts eine Ausnehmung (45) ausgebildet ist, die mit der Querbohrung (35) des Bohrwerkzeugs (1) fluchtet.

2. Bohrwerkzeug nach Anspruch 1,
**dadurch gekennzeichnet, dass** im Bohrkopf ein Schlitz (33) vorhanden ist, der sich von der Basisfläche (31) in Richtung des Einspannendes (3) erstreckt.

3. Bohrwerkzeug nach Anspruch 1 oder 2, **dadurch gekennzeichnet, dass** die Zentrierflächen (27) beider Mitnehmer (15, 17) zueinander parallel sind.

4. Bohrwerkzeug nach einem der Ansprüche 1 bis 3, **dadurch gekennzeichnet, dass** die Stützflächen (25) beider Mitnehmer (15, 17) zueinander parallel sind, und/oder dass die Passflächen (29) beider Mitnehmer (15, 17) zueinander parallel sind.

5. Bohrwerkzeug nach einem der vorhergehenden Ansprüche, **dadurch gekennzeichnet, dass** die Stützfläche (25) und die Passfläche (29) eines Mitnehmers (15, 17) zueinander parallel sind.

6. Bohrwerkzeug nach einem der vorhergehenden Ansprüche, **dadurch gekennzeichnet, dass** die Basisfläche (31) eben ist, und dass der Normalenvektor der Basisfläche (31) parallel zur Längsachse (23) verläuft.

7. Bohrwerkzeug nach einem der vorhergehenden Ansprüche, **dadurch gekennzeichnet, dass** eine Längsachse der Querbohrung (35) oder, sofern das Bohrwerkzeug auf die Ansprüche 2 bis 6 rückbezogen ist, der Normalenvektor des Schlitzes (33) etwa in Richtung der Winkelhalbierenden der Normalenvektoren der Stützfläche (25) und der Zentrierfläche (27)eines Mitnehmers (15, 17) verläuft.

8. Bohrwerkzeug nach einem der vorhergehenden Ansprüche, **dadurch gekennzeichnet, dass** die Zentrierfläche (27) mit der Stützfläche (25) einen Winkel (alpha) zwischen 105° und 75°, bevorzugt einen Winkel (alpha) von 90°, einschließt.

9. Bohrwerkzeug nach einem der vorhergehenden Ansprüche, **dadurch gekennzeichnet, dass** der Bohrkopf (7) eine Führungsleiste (9) aufweist.

10. Wechselschneidplatte zur Verwendung in einem Bohrwerkzeug nach einem der vorhergehenden Ansprüche, wobei die Wechselschneidplatte (13) einen vorderen Abschnitt, einen prismatischen Befestigungsabschnitt und eine Längsachse umfasst, wobei der vordere Abschnitt eine oder mehrere Schneiden aufweist, und wobei der Befestigungsabschnitt so gestaltet ist, dass er formschlüssig mit den Mitnehmern (15, 17) des Bohrwerkzeugs (7) zusammenwirkt, wobei der Befestigungsabschnitt zwei Kontaktflächen (37) sowie zwei Gegenpassflächen (41) und zwei Gegenzentrierflächen (39) aufweist, wobei die Normalenvektoren der Kontaktflächen (37), Gegenpassflächen (41) und der Gegenzentrierflächen (39) orthogonal zur Längsachse (23) verlaufen, wobei jeweils eine Gegenzentrierfläche (39) zwischen einer Kontaktfläche (37) und einer Gegenpassfläche (41) angeordnet ist, und wobei die Gegenzentrierflächen (39) mit den benachbarten Kontaktflächen (37) einen Winkel (alpha) zwischen 120° und 60° einschließen, und wobei dass an einem Ende des Befestigungsabschnitts eine Ausnehmung (45) ausgebildet ist, **dadurch gekennzeichnet, dass** eine Längsachse der Ausnehmung (45) etwa in Richtung der Winkelhalbierenden der Normalenvektoren der Kontaktflächen (37) und der Gegenzentrierflächen (39) verläuft, und dass die Ausnehmung (45) in eingebautem Zustand mit der Querbohrung (35) des Bohrwerkzeugs (1) fluchtet.

11. Wechselschneidplatte nach Anspruch 10, **dadurch gekennzeichnet, dass** die beiden Gegenzentrierflächen (39) zueinander parallel sind.

12. Wechselschneidplatte nach Anspruch 10 oder 11, **dadurch gekennzeichnet, dass** die beiden Kontaktflächen (37) zueinander parallel sind und/oder dass die beiden Gegenpassflächen (41) zueinander parallel sind.

13. Wechselschneidplatte nach einem der Ansprüche 10 bis 12, **dadurch gekennzeichnet, dass** die Gegenzentrierfläche (39) mit der Kontaktfläche (37) einen Winkel (alpha) zwischen 105° und 75°, bevorzugt einen Winkel (alpha) von 90°, einschließt.

## Claims

1. A drilling tool having an exchangeable insert (13), the drilling tool comprising a shank (5), a clamping end (3), a drill head (7) and a longitudinal axis (23),
wherein a receptacle for the exchangeable insert (13) is formed on the drill head (7),
wherein the receptacle comprises two drivers (15, 17),
wherein a support surface (25) is formed on each driver (15, 17),
wherein the normal vectors of the support surfaces (25) are orthogonal to the longitudinal axis (23),
wherein the drivers (15, 17) are arranged centrally symmetrically with respect to the longitudinal axis (23),
wherein a centering surface (27) is formed adjacent to the support surface (25) of a driver (15, 17),
wherein a centering surface (27) is formed adjacent to the support surface (25) of a driver (15, 17),
wherein the centering surface (27) forms an angle (alpha) of between 120° and 60° with the support surface (25),
wherein a fitting surface (29) is formed adjacent to the centering surface (27),
wherein a base surface (31) is formed between the drivers (15, 17) at the transition between the drill head (7) and the drivers (15, 17), and
wherein the base surface (31) is rotationally symmetrical with respect to the longitudinal axis (23),
wherein the drill head (7) has securing means for securing the exchangeable insert (13) against falling out,
wherein the exchangeable insert (13) comprises a front portion, a prismatic fastening portion and a longitudinal axis,
wherein the front portion has one or more cutting edges, and wherein the fastening portion is designed such that it cooperates in a form-fitting manner with the drivers (15, 17) of the drilling tool (7),
**characterized in that** the securing means comprise a transverse bore (35) formed as a stepped bore in the drill head (7),
**in that** the transverse bore (35) passes through both drivers (15, 17),
**in that** the transverse bore (35) has an internal thread in a driver (l7), and
**in that** at one end of the fastening portion a recess (45) is formed which is aligned with the transverse bore (35) of the drilling tool (1).

2. The drilling tool according to claim 1, **characterized in that** the drill head has a slot (33) which extends from the base surface (31) towards the clamping end (3).

3. The drilling tool according to claim 1 or 2, **characterized in that** the centering surfaces (27) of both drivers (15, 17) are parallel to each other.

4. The drilling tool according to one of the claims 1 to 3, **characterized in that** the support surfaces (25) of both drivers (15, 17) are parallel to each other, and/or **in that** the fitting surfaces (29) of both drivers (15, 17) are parallel to each other.

5. The drilling tool according to one of the preceding claims, **characterized in that** the support surface (25) and the fitting surface (29) of a driver (15, 17) are parallel to each other.

6. The drilling tool according to one of the preceding claims, **characterized in that** the base surface (31) is planar, and **in that** the normal vector of the base surface (31) extends parallel to the longitudinal axis (23).

7. The drilling tool according to one of the preceding claims, **characterized in that** a longitudinal axis of the transverse bore (35) or, if the drilling tool is referred back to claims 2 to 6, the normal vector of the slot (33) extends approximately in the direction of the bisecting line of the normal vectors of the support surface (25) and the centering surface (27) of a driver (15, 17).

8. The drilling tool according to one of the preceding claims, **characterized in that** the centering surface (27) forms an angle (alpha) of between 105° and 75°, preferably an angle (alpha) of 90°, with the support surface (25).

9. The drilling tool according to one of the preceding claims, **characterized in that** the drill head (7) has a guide pad (9).

10. An exchangeable insert for use in a drilling tool according to one of the preceding claims, wherein the exchangeable insert (13) comprises a front portion, a prismatic fastening portion and a longitudinal axis, wherein the front portion has one or more cutting edges, and wherein the fastening portion is configured to cooperate with the drivers (15, 17) of the drilling tool (7) in a form-locking manner, wherein the fastening portion has two contact surfaces (37) and two counter-fitting surfaces (41) and two counter-centering surfaces (39), wherein the normal vectors of the contact surfaces (37), counter-fitting surfaces (41) and counter-centering surfaces (39) are orthogonal to the longitudinal axis (23), wherein a respective counter-centering surface (39) is arranged between a contact surface (37) and a counter-fitting surface (41), and wherein the counter-centering surfaces (39) form an angle (alpha) of between 120° and 60° with the adjacent contact surfaces (37), and wherein a recess (45) is formed at one end of the fastening portion, **characterized in that** a longitudinal axis of the recess (45) extends approximately in the direction of the bisecting line of the normal vectors of the contact surfaces (37) and the counter-centering surfaces (39), and **in that** the recess (45) is aligned with the transverse bore (35) of the drilling tool (1) in the installed state.

11. The exchangeable insert according to claim 10, **characterized in that** the two counter-centering surfaces (39) are parallel to each other.

12. The exchangeable insert according to claim 10 or 11, **characterized in that** the two contact surfaces (37) are parallel to each other and/or **in that** the two counter-fitting surfaces (41) are parallel to each other.

13. The exchangeable insert according to one of the claims 10 to 12, **characterized in that** the counter-centering surface (39) forms an angle (alpha) of between 105° and 75°, preferably an angle (alpha) of 90°, with the contact surface (37).

## Revendications

1. Outil de perçage à plaque de coupe interchangeable (13), comprenant une tige (5), une extrémité de calage (3), une tête de perçage (7) et un axe longitudinal (23), dans lequel un logement destiné à la plaque de coupe interchangeable (13) est formé au niveau de la tête de perçage (7),
dans lequel le logement comprend deux organes d'entraînement (15, 17),
dans lequel une surface d'appui (25) est formée au niveau de chaque organe d'entraînement (15, 17), les vecteurs normaux des surfaces d'appui (25) s'étendant de manière orthogonale par rapport à l'axe longitudinal (23),
dans lequel les organes d'entraînement (15, 17) sont agencés par rapport à l'axe longitudinal (23) de manière à présenter une symétrie centrale,
dans lequel une surface de centrage (27) est formée adjacente à la surface d'appui (25) d'un organe d'entraînement (15, 17),
dans lequel la surface de centrage (27) forme avec la surface d'appui (25) un angle (alpha) compris entre 120° et 60°,
dans lequel une surface d'ajustage (29) est formée adjacente à la surface de centrage (27),
dans lequel une surface de base (31) est formée entre les organes d'entraînement (15, 17) au niveau de la transition entre la tête de perçage (7) et les organes d'entraînement (15, 17), et
dans lequel la surface de base (31) présente une symétrie de rotation par rapport à l'axe longitudinal (23),
dans lequel la tête de perçage (7) présente des moyens de sécurité permettant d'empêcher la plaque de coupe interchangeable (13) de tomber,
dans lequel la plaque de coupe interchangeable (13) comprend une partie avant, une partie de fixation prismatique et un axe longitudinal,
dans lequel la partie avant présente une ou plusieurs arête(s) de coupe, et dans lequel la partie de fixation est conçue de sorte qu'elle coopère avec les organes d'entraînement (15, 17) de l'outil de perçage (7) en présentant un verrouillage par complémentarité de forme,
**caractérisé en ce que** les moyens de blocage comprennent un alésage transversal (35) réalisé dans la tête de perçage (7) sous la forme d'un alésage étagé,
**en ce que** l'alésage transversal (35) traverse les deux organes d'entraînement (15, 17),
**en ce que** l'alésage transversal (35) présente un filetage intérieur au sein d'un organe d'entraînement (17), et
**en ce qu'**un évidement (45) aligné avec l'alésage transversal (35) de l'outil de perçage (1) est formé à une extrémité de la section de fixation.

2. Outil de perçage selon la revendication 1, **caractérisé en ce qu'**une fente (33) s'étendant à partir de la surface de base (31) en direction de l'extrémité de calage (3) est présente dans la tête de perçage.

3. Outil de perçage selon la revendication 1 ou 2, **caractérisé en ce que** les surfaces de centrage (27) des deux organes d'entraînement (15, 17) sont parallèles l'une à l'autre.

4. Outil de perçage selon l'une quelconque des revendications 1 à 3, **caractérisé en ce que** les surfaces d'appui (25) des deux organes d'entraînement (15, 17) sont parallèles l'une à l'autre, et/ou **en ce que** les surfaces d'ajustage (29) des deux organes d'entraînement (15, 17) sont parallèles l'une à l'autre.

5. Outil de perçage selon l'une quelconque des revendications précédentes, **caractérisé en ce que** la surface d'appui (25) et la surface d'ajustage (29) d'un organe d'entraînement (15, 17) sont parallèles l'une à l'autre.

6. Outil de perçage selon l'une quelconque des revendications précédentes, **caractérisé en ce que** la surface de base (31) est plane et **en ce que** le vecteur normal de la surface de base (31) s'étend parallèlement à l'axe longitudinal (23).

7. Outil de perçage selon l'une quelconque des revendications précédentes, **caractérisé en ce qu'**un axe longitudinal de l'alésage transversal (35), ou bien le vecteur normal de la fente (33) si l'outil de perçage est selon les revendications 2 à 6, s'étend approximativement dans la direction de la bissectrice des vecteurs normaux de la surface d'appui (25) et de la surface de centrage (27) d'un organe d'entraînement (15, 17).

8. Outil de perçage selon l'une quelconque des revendications précédentes, **caractérisé en ce que** la surface de centrage (27) forme avec la surface d'appui (25) un angle (alpha) compris entre 105° et 75°, de manière préférée un angle (alpha) de 90°.

9. Outil de perçage selon l'une quelconque des revendications précédentes, **caractérisé en ce que** la tête de perçage (7) présente une barre de guidage (9).

10. Plaque de coupe interchangeable destinée à être utilisée dans un outil de perçage selon l'une quelconque des revendications précédentes, dans laquelle la plaque de coupe interchangeable (13) comprend une partie avant, une partie de fixation prismatique et un axe longitudinal, dans laquelle la partie avant présente une ou plusieurs arête(s) de coupe, et dans laquelle la partie de fixation est conçue de sorte qu'elle coopère avec les organes d'entraînement (15, 17) de l'outil de perçage (7) en présentant un verrouillage par complémentarité de forme, dans laquelle la partie de fixation présente deux surfaces de contact (37) ainsi que deux surfaces d'ajustage homologues (41) et deux surfaces de centrage homologues (39), dans laquelle les vecteurs normaux des surfaces de contact (37), des surfaces d'ajustage homologues (41) et des surfaces de centrage homologues (39) s'étendent de manière orthogonale par rapport à l'axe longitudinal (23), dans laquelle respectivement une surface de centrage homologue (39) est agencée entre une surface de contact (37) et une surface d'ajustage homologue (41), et dans laquelle les surfaces de centrage homologues (39) forment avec les surfaces de contact (37) voisines un angle (alpha) compris entre 120° et 60°, et dans laquelle un évidement (45) est formé à une extrémité de la section de fixation, **caractérisée en ce qu'**un axe longitudinal de l'évidement (45) s'étend approximativement dans la direction de la bissectrice des vecteurs normaux des surfaces de contact (37) et des surfaces de centrage homologues (39), et **en ce que**, à l'état monté, l'évidement (45) est aligné avec l'alésage transversal (35) de l'outil de perçage (1).

11. Plaque de coupe interchangeable selon la revendication 10, **caractérisée en ce que** les deux surfaces de centrage homologues (39) sont parallèles l'une à l'autre.

12. Plaque de coupe interchangeable selon la revendication 10 ou 11, **caractérisée en ce que** les deux surfaces de contact (37) sont parallèles l'une à l'autre et/ou **en ce que** les deux surfaces d'ajustage homologues (41) sont parallèles l'une à l'autre.

13. Plaque de coupe interchangeable selon l'une quelconque des revendications 10 à 12, **caractérisée en ce que** la surface de centrage homologue (39) forme avec la surface de contact (37) un angle (alpha) compris entre 105° et 75°, de manière préférée un angle (alpha) de 90°.
